# DEMANDE DE BREVET EUROPEEN

(11) **EP 4 462 649 A1**
(43) Date de publication de la demande: **13.11.2024**
(21) Numéro de dépôt: 24173720.4
(22) Date de dépôt: 02.05.2024
(51) Int. Cl.: H02K 1/24, H02K 1/276

(54) **ROTOR POUR MACHINE ÉLECTRIQUE AVEC BARRIÈRE DE FLUX COMPRENANT DES ÉVIDEMENTS SÉPARÉS PAR UN DOUBLE-PONT**

(30) Priorité: 12.05.2023 FR 2304755
(71) Demandeur: IFP Energies nouvelles, 92500 Rueil-Malmaison (FR)
(72) Inventeur: CHAREYRON, Baptiste, 92852 RUEIL-MALMAISON CEDEX (FR); VALIN, Thomas, 92852 RUEIL-MALMAISON CEDEX (FR); MEDIAVILLA SANTOS, Victor, 92852 RUEIL-MALMAISON CEDEX (FR)
(74) Mandataire: IFP Energies nouvelles

(57) **Abrégé**

L'invention concerne un rotor pour machine électrique comprenant :
- un corps de rotor ;
- au moins une paire de pôles magnétiques comprenant chacun au moins une barrière de flux (B1, B2, B3) ;
- les évidements (10, 20, 25) d'une même barrière de flux étant séparés par des ponts magnétiques (35).

La première ligne médiane coupe la surface externe du corps de rotor en deux points d'extrémité, et coupe l'axe de symétrie radial en un point interne à un rayon interne Ri1 vérifiant *Rᵢₙₜ* + (*Rₑₓₜ* - *Rᵢₙₜ*) - (0,105 · *p* + 0,147 - 0,05) ≤ *Ril* ≤ *Rᵢₙₜ* + (*Rₑₓₜ* - *Rᵢₙₜ*) *·* (0,105 · *p* + 0,147 + 0,05) p étant le nombre de paires de pôles magnétiques, Rᵢₙₜ et Rₑₓₜ étant les rayons interne et externe du corps de stator.

Au moins une barrière de flux comprend au moins un double pont (40) formé par au moins deux ponts magnétiques (35) séparés entre eux d'une distance inférieure ou égale à deux fois la somme des épaisseurs desdits ponts magnétiques (35).

## Description

### Domaine technique

La présente invention se rapporte à une machine électrique tournante synchro-réluctante (assistée ou non d'aimants permanents) et concerne plus particulièrement l'architecture particulière d'un rotor d'une telle machine.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent généralement des logements pour des aimants permanents et des perforations pour créer des barrières de flux permettant de diriger radialement le flux magnétique des aimants vers le stator et pour favoriser la création d'un couple reluctant, et d'alléger ce rotor pour diminuer les efforts centrifuges que l'empilage de tôle doit supporter.

Ce rotor est généralement logé à l'intérieur d'un stator qui porte des bobinages électriques permettant de générer un champ magnétique permettant d'entraîner en rotation le rotor.

### Technique antérieure

Comme cela est mieux décrit notamment dans la demande de brevet WO2020/020580, le rotor d'une machine synchro-réluctante comprend une pluralité d'évidements axiaux qui traversent les tôles de part en part.

Pour la conception du rotor décrite dans la demande de brevet précitée, une première série d'évidements axiaux, disposés radialement les uns au-dessus des autres et à distance les uns des autres, forment des logements pour des générateurs de flux magnétiques, ici des aimants permanents sous forme de barreaux rectangulaires.

L'autre série d'évidements consiste en des perforations de direction radiale inclinée, qui partent de ces logements pour arriver au voisinage du bord des tôles, au voisinage de l'entrefer.

Les perforations inclinées sont disposées symétriquement par rapport aux logements des aimants de manière à former à chaque fois une figure géométrique sensiblement en forme de V à fond aplati avec le fond plat formé par le logement des aimants et avec les bras inclinés de ce V formés par les perforations. Il se crée ainsi des barrières de flux formées par les perforations. Le flux magnétique provenant des aimants permanents ne peut alors que transiter par les parties pleines entre les perforations. Ces parties pleines sont constituées d'un matériau ferromagnétique. L'espace séparant les perforations inclinées des logements des aimants est appelé pont magnétique ou encore isthme magnétique.

Le document DE10253950 décrit des évidements axiaux qui ont une base rectangulaire mais qui sont évasés sur leurs côtés. L'intérêt d'une telle architecture pour ces évidements axiaux est de permettre de diminuer l'épaisseur des ponts magnétiques. Ceci permet d'améliorer le fonctionnement électromagnétique des ponts magnétiques et des barrières de flux. Cependant, un tel évasement engendre un problème technique supplémentaire. En effet, on constate que la tenue mécanique de ces isthmes magnétiques à haute vitesse n'est pas assurée car la contrainte mécanique sur ceux-ci est très importante. Le risque de rupture ou de fissure est réel.

On connait également les demandes de brevets WO 2019/052862, WO 2020/020581 et WO2022/084080 qui cherchent à améliorer la tenue mécanique des ponts magnétiques sans dégrader les performances électromagnétiques. Toutefois, la réalisation de congés non tangentiels aux évidements de WO 2019/052862 complexifie la réalisation. Les pôles asymétriques de WO 2020/020581 complexifient également la réalisation et ne sont pas adaptés à toutes les machines électriques.

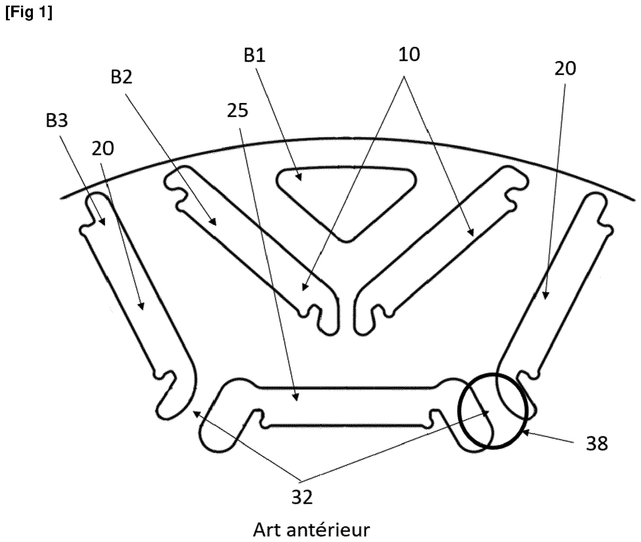

La figure 1 illustre sensiblement un rotor de l'art antérieur avec trois barrières de flux B1, B2 et B3 positionnées radialement les unes au-dessus des autres.

La barrière de flux B1 est externe, la barrière de flux B2 est centrale, c'est-à-dire radialement entre la barrière de flux externe B1 et la barrière de flux interne B3, qui est celle la plus près de l'axe de rotation du rotor (non visible).

Chacune de ces barrières de flux B1, B2 et B3 comprend des évidements 10, 20 et 25 et les évidements 10, 20 et 25 d'une même barrière de flux B1, B2 ou B3 sont séparés par des ponts magnétiques 32 qui constituent un simple pont 38 (on entend par « simple pont » un pont constitué par un seul et unique pont magnétique entre deux évidements).

Ces simples ponts 38 constitués d'un unique pont magnétique entre deux évidements successifs d'une même barrière de flux, le long de la ligne neutre de la barrière de flux, nécessitent un compromis entre l'épaisseur nécessaire pour réduire les contraintes et assurer la tenue mécanique et la tenue en fatigue et les performances électromagnétiques. En effet, pour réduire les contraintes mécaniques, il est nécessaire d'augmenter l'épaisseur des ponts magnétiques mais cette augmentation entraîne une diminution des performances électromagnétiques. Ainsi, lorsque la vitesse de rotation de la machine électrique est élevée, les efforts centrifuges sont importants et la tenue mécanique des ponts magnétiques nécessitent une augmentation de l'épaisseur entrainant une réduction des performances électromagnétiques. A l'inverse, pour maintenir les performances électromagnétiques, il peut être nécessaire d'abaisser la vitesse de rotation de la machine.

Le problème technique que l'on se propose de résoudre consiste ainsi à améliorer la tenue mécanique et la tenue en fatigue des ponts magnétiques sans dégrader les performances électromagnétiques, notamment pour des machines électriques à très fortes vitesses de rotation (supérieure à 18 000 tours par minute, et de préférence supérieure à 20 000 tours par minute).

De plus, l'invention cherche également à améliorer les performances des machines électriques en augmentant la part de synchro-réluctance dans le couple (donc à maximiser le couple réluctant), et si possible en minimisant la quantité d'aimants permanents nécessaires, voir en se passant totalement d'aimants permanents.

### Résumé de l'invention

Pour répondre aux problèmes techniques précités, l'invention concerne un rotor pour machine électrique, le rotor comprenant :
- un corps de rotor, de préférence configuré pour être positionné sur un arbre de rotor, le corps de rotor étant défini par une surface interne de rayon interne et une surface externe de rayon externe ;
- au moins une paire de pôles magnétiques répartis circonférentiellement sur le corps de rotor, les pôles magnétiques successifs étant séparés par des plans radiaux de séparation ;
- chaque pôle magnétique comprend au moins une barrière de flux, chaque barrière de flux comprenant au moins un évidement et au moins l'une d'elles comprend au moins deux évidements, la première ligne médiane de la première barrière de flux de chaque pôle magnétique, en partant du centre vers l'extérieur du rotor, étant une ligne concave sans discontinuités, en vue en coupe transversale, la première ligne médiane coupant la surface externe du corps de rotor en deux points d'extrémité, et comprenant un axe de symétrie radial, l'intersection de la première ligne médiane et de son axe de symétrie radial étant un premier point interne à une première distance interne (formant un premier rayon interne) du centre dudit corps de rotor, la première distance interne Ri1 du point interne de la première ligne médiane de la première barrière de flux vérifiant *Rᵢₙₜ* + (*Rₑₓₜ* - *Rᵢₙₜ*) · (0,105 · *p* + 0,147 - 0,05) ≤ *Ri*1 ≤ *Rᵢₙₜ* + (*Rₑₓₜ* - *Rᵢₙₜ*) · (0,105 · *p* + 0,147 + 0,05), p étant le nombre de paires de pôles magnétiques, Rₑₓₜ étant le rayon externe du corps de rotor et Rᵢₙₜ le rayon interne du corps de rotor ;
- les évidements d'une même barrière de flux étant séparés entre eux.

Autrement dit, au sens de l'invention, une barrière de flux comprend un seul évidement ou plusieurs évidements séparés entre eux. Elle n'est donc pas limitée à un unique évidement. Une barrière de flux comprend ici un ensemble d'évidement(s) (ou combinaison d'évidement(s)) suivant une ligne médiane partant d'un point situé sur la surface externe du corps de rotor, passant par un point interne (correspondant au point de la ligne médiane le plus proche de l'axe du corps de rotor) et rejoignant un autre point situé sur la surface externe du corps de rotor, de manière à former une ligne concave continue (la ligne concave peut comprendre des points où la dérivée d'un côté est différente de la dérivée de l'autre côté) et comprend de préférence aussi la matière qui sépare les évidements successifs, suivant la ligne médiane de chaque barrière de flux, entre eux (ponts ou double ponts). Le terme « barrière de flux » pourrait être remplacé par «zone de guidage du flux ».

De plus, au moins une barrière de flux comprend au moins un double pont séparant deux évidements de cette barrière de flux, le double pont étant formé par au moins deux ponts magnétiques séparés entre eux d'une distance inférieure ou égale à deux fois la somme des épaisseurs desdits ponts magnétiques.

De préférence, chaque pôle magnétique comprend au moins deux barrières de flux positionnées radialement les unes au-dessus des autres, la deuxième ligne médiane de la deuxième barrières de flux de chaque pôle magnétique, en partant du centre vers l'extérieur du rotor, étant une ligne concave sans discontinuités, en vue en coupe transversale la deuxième ligne médiane coupant la surface externe du corps de rotor en deux deuxièmes points d'extrémité, et comprenant une symétrie par rapport audit axe de symétrie radial, l'intersection de la deuxième ligne médiane et dudit axe de symétrie radial étant un deuxième point interne à un deuxième rayon interne du centre dudit corps de rotor, le deuxième rayon interne Ri2 du deuxième point interne de la deuxième ligne médiane (L2) de la deuxième barrière de flux (B2) vérifiant *Rᵢₙₜ* + (*Rₑₓₜ* - *Rᵢₙₜ*) · (0,066 · *p* + 0,519 - 0,05) ≤ *Ri2* ≤ *Rᵢₙₜ* + (*Rₑₓₜ* - *Rᵢₙₜ*) · (0,066 · *p* + 0,519 + 0,05) p étant le nombre de paires de pôles magnétiques, Rᵢₙₜ étant le rayon interne du corps de stator et Rₑₓₜ étant le rayon externe du corps de stator. Selon une configuration de l'invention, chaque pôle magnétique comprend au moins un aimant permanent dans un évidement.

Alternativement, le corps de rotor ne comprend aucun aimant permanent.

Selon une variante de l'invention, au moins une, de préférence chaque, barrière de flux comprend au moins trois évidements et au moins deux double-ponts.

Avantageusement, le corps de rotor comprend au moins trois barrières de flux positionnées radialement les unes au-dessus des autres.

De manière avantageuse, chaque double-pont est formé par deux ponts magnétiques séparés par une ouverture de section sensiblement trapézoïdale, rectangulaire ou carrée et de préférence dont la longueur est sensiblement égale à la longueur desdits ponts magnétiques et dont la largeur est de préférence inférieure ou égale à deux fois la somme des épaisseurs des ponts magnétiques formant le double-pont.

Selon un mode de réalisation avantageux de l'invention, l'épaisseur des ponts magnétiques desdits double-ponts est sensiblement constante ou décroissante le long de la longueur du pont magnétique, de l'intérieur vers l'extérieur.

De manière préférée, l'épaisseur des ponts magnétiques desdits double-ponts est comprise entre 0,2 et 1 ,5mm, de préférence entre 0,2 et 0,5mm.

Selon une configuration de l'invention, les rayons de raccordement entre les ponts magnétiques des double-ponts et les évidements sont compris entre 0,2 et 0,5mm.

Selon une variante de l'invention, le corps de rotor est formé par un empilage de tôles et de préférence les épaisseurs des ponts magnétiques et/ou les rayons de raccordement sont sensiblement égaux à l'épaisseur desdites tôles.

L'invention concerne aussi une machine électrique synchro-réluctante comprenant un rotor telle que décrit précédemment et un stator entourant le rotor.

### Liste des figures

D'autres caractéristiques et avantages du rotor et/ou de la machine électrique selon l'invention, apparaîtront à la lecture de la description ci-après d'exemples non limitatifs de réalisations, en se référant aux figures annexées et décrites ci-après.
La figure 1 (déjà décrite) représente un rotor de machine électrique selon l'art antérieur.
La figure 2 représente le stator et le rotor d'une machine électrique en vue en coupe selon un mode de réalisation de l'invention.
La figure 3 représente les détails d'un rotor de machine électrique en vue en coupe selon un mode de réalisation de l'invention.
La figure 4 représente un exemple de rotor de machine électrique selon l'invention.
La figure 5 représente un détail géométrique d'un premier exemple de double pont d'un rotor de machine électrique selon l'invention.
La figure 6 représente un détail géométrique d'un deuxième exemple de double pont d'un rotor de machine électrique selon l'invention.
La figure 7 représente un détail géométrique d'un troisième exemple de double pont d'un rotor de machine électrique selon l'invention.
La figure 8 représente la comparaison de tension à vide selon la position du rotor d'un rotor de machine électrique selon l'art antérieur et d'un rotor de machine électrique selon l'invention.
La figure 9 représente la comparaison des ondulations de couple électromécanique en fonction de la position du rotor d'un rotor de machine électrique selon l'art antérieur et d'un rotor de machine électrique selon l'invention.
La figure 10 représente la comparaison du couple mécanique en fonction de la vitesse de rotation d'un rotor de machine électrique selon l'art antérieur et d'un rotor de machine électrique selon l'invention.
La figure 11 représente la comparaison de la puissance en fonction de la vitesse de rotation d'un rotor de machine électrique selon l'art antérieur et d'un rotor de machine électrique selon l'invention.

### Description des modes de réalisation

L'invention concerne un rotor pour machine électrique, notamment une machine électrique du type synchro-réluctante assistée ou non d'aimants permanents. En d'autres termes, la machine électrique peut, dans certains cas, comprendre des aimants permanents et dans d'autres cas, ne pas comprendre d'aimants permanents.

Généralement, une machine électrique comprend un rotor et un stator. Le rotor est en rotation autour d'un axe de rotation alors que le stator est fixe par rapport à cet axe de rotation. La rotation relative du rotor par rapport au stator permet :
- soit d'entraîner en rotation un élément par le rotor (dans ce cas, la machine électrique fonctionne en tant que moteur électrique),
- soit de transmettre la rotation pour transformer l'énergie en énergie électrique (dans ce cas, la machine électrique fonctionne en tant que générateur électrique).

Le rotor peut avantageusement être de forme cylindrique et tourner autour de l'axe de ce cylindre qui sert d'axe de rotation.

Les dénomination « radiale », circonférentielle », « intérieur », « extérieur », « interne » et « externe » s'entendent relativement à l'axe de rotation du rotor.

Selon l'invention, le rotor comprend :
- un corps de rotor, de préférence configuré pour être positionné sur un arbre de rotor (la machine électrique comprend généralement l'arbre de rotor) formant un axe de rotation dudit rotor ; ainsi, le corps de rotor peut être entraîné en rotation via l'arbre de rotor ou entrainer l'arbre de rotor en rotation, la rotation étant réalisée autour de l'axe de rotation qui correspond à l'axe de l'arbre (l'arbre étant de préférence cylindrique ou sensiblement cylindrique) ; le corps de rotor étant défini par une surface interne de rayon interne et une surface externe de rayon externe ; ainsi, les surfaces interne et externe sont cylindriques et, en coupe dans un plan orthogonal à l'axe de rotation, les surfaces interne et externe sont représentées chacune par un cercle. Le corps de rotor forme donc un espace annulaire entre les surfaces de rayons interne et externe.
- au moins une paire de pôles magnétiques répartis circonférentiellement sur le corps de rotor, les pôles magnétiques successifs étant séparés par des plans radiaux de séparation. Ainsi, ils sont totalement séparés les uns des autres. Les plans radiaux de séparation découpent ainsi le corps de rotor en une pluralité de secteurs angulaires, l'ensemble des secteurs angulaires formant le corps de rotor. Chaque secteur angulaire du rotor forme un unique pôle magnétique.
- chaque pôle magnétique comprend au moins une barrière de flux de manière à guider le flux magnétique vers le stator (par exemple vers la surface externe du rotor lorsque le stator entoure le rotor). Chaque barrière de flux comprend au moins un évidement et au moins l'une d'elles (au moins l'une des barrières de flux) comprend au moins deux évidements. Les évidements des barrières de flux sont axiaux. En d'autres termes, les évidements s'étendent dans la direction axiale (longitudinale), c'est-à-dire le long de l'axe du rotor en traversant le rotor sur toute sa longueur axiale.

Ainsi, le rotor peut comprendre par exemple :
∘ une unique barrière de flux avec au moins deux évidements, l'un des deux au moins pouvant par exemple servir à loger un aimant permanent (alternativement, la barrière de flux peut ne comprendre aucun aimant permanent) ;
∘ au moins deux barrières de flux et l'une d'elle (au moins) comprend au moins deux évidements, un aimant au moins pouvant par exemple être positionné dans un évidement d'une des deux barrières de flux (alternativement, les barrières de flux peuvent ne comprendre aucun aimant permanent) ;

- les évidements d'une même barrière de flux étant séparés entre eux, par exemple par des ponts magnétiques.

On appelle « pont magnétique » un joint de matière (du corps de rotor en matériau magnétique notamment) situé entre deux évidements d'une même barrière de flux. Ainsi, les ponts magnétiques se distinguent des portions de corps de rotor situées entre les barrières de flux positionnées radialement les unes au-dessus des autres, lorsque le rotor comprend au moins deux barrières de flux. En effet, ces portions de corps de rotor s'étendent sensiblement radialement entre les barrières de flux ou entre des évidements de deux barrières de flux distinctes (au moins au niveau de l'axe du pôle magnétique) alors que les ponts magnétiques s'étendent sensiblement le long de la fibre neutre de la barrière de flux entre deux évidements d'une même barrière de flux. De cette manière, au moins une barrière de flux comprend deux évidements séparés par au moins un pont magnétique.

Une barrière de flux est guidée par une ligne médiane (aussi appelée fibre neutre ou ligne neutre). Ainsi, la barrière de flux, et donc les évidements de cette barrière de flux, s'étendent le long de la ligne neutre.

Selon l'invention, la première ligne médiane de la première barrière de flux de chaque pôle magnétique, en partant du centre vers l'extérieur du rotor (la première ligne médiane correspondant ainsi à la ligne médiane de la barrière de flux interne), est une ligne concave sans discontinuités. On appelle « ligne médiane » une ligne qui est à égale distance des bords de la barrière de flux (qui font respectivement face au centre et à la périphérie du rotor), cette ligne médiane est définie dans une section transversale du rotor (c'est-à-dire dans un plan perpendiculaire à l'axe du rotor). Ainsi, la première barrière de flux, en partant du centre (de l'axe) vers l'extérieur du rotor, correspond à la barrière de flux interne, c'est-à-dire celle qui est la plus proche de l'axe du rotor.

De préférence, la deuxième ligne médiane de la deuxième barrière de flux de chaque pôle magnétique, en partant du centre vers l'extérieur du rotor, peut être une ligne concave sans discontinuités. La deuxième barrière de flux, en partant du centre (de l'axe) vers l'extérieur du rotor, correspond à la prochaine barrière de flux la plus proche de l'axe du rotor, après la première barrière de flux (barrière dite interne).

De manière encore préférée, chaque ligne médiane de chaque barrière de flux de chaque pôle magnétique peut être une ligne concave sans discontinuité. En d'autres termes, toutes les barrières de flux du rotor peuvent avoir des lignes médianes concaves et sans discontinuités.

Grâce à la forme concave et sans discontinuités des lignes médianes (d'au moins la première ligne médiane, de préférence des première et deuxième lignes médianes et de manière encore préférée, de toutes les lignes médianes), les performances de la machine électrique sont améliorées.

Par ligne « sans discontinuités », on entend que la ligne concernée est entièrement dérivable et qu'il n'existe pas de point où la dérivée d'un côté du point n'est pas égale à la dérivée de l'autre côté du point. Lorsqu'une barrière de flux est formée d'une pluralité d'évidements séparés notamment par au moins un pont magnétique, la ligne médiane traverse également le pont magnétique. Autrement dit, un pont magnétique ne forme pas une discontinuité de la ligne médiane.

En coupe transversale, la première ligne médiane coupe la surface externe du corps de rotor (représentée par un cercle en coupe transversale) en deux premiers points d'extrémité. En d'autres termes, dans chaque plan de coupe transversale, la première ligne médiane coupe le cercle représentant la surface externe du corps de rotor (surface externe cylindrique) en lesdits deux premiers points d'extrémités. De plus, la première ligne médiane comprend un axe de symétrie radial, l'intersection de la première ligne médiane et de son axe de symétrie étant un premier point interne à une distance correspondant à un premier rayon interne du centre (de l'axe) dudit corps de rotor, appelé « distance interne ». Au niveau du premier point interne de la première ligne médiane, la tangente à la première ligne médiane est perpendiculaire à l'axe de symétrie radial. Ainsi, la première ligne médiane ne comporte pas de discontinuités au niveau du premier point interne, la dérivée d'un côté de la première ligne médiane étant alors égale à la dérivée de l'autre côté de la première ligne médiane.

Par « coupe transversale », on entend une vue en coupe dans un plan orthogonal à l'axe de rotation.

La symétrie permet une optimisation des performances mécaniques de la machine électrique. Selon l'invention, le premier rayon interne (la distance interne) Ri1 du premier point interne de la première ligne médiane de la première barrière vérifie la formule *Rᵢₙₜ* + (*Rₑₓₜ* - *Rᵢₙₜ*) · (0,105 · *p* + 0,147 - 0,05) ≤ *Ri*1 ≤ *Rᵢₙₜ* + (*Rₑₓₜ* - *Rᵢₙₜ*) · (0,105 · *p* + 0,147 + 0,05) (par exemple en millimètres), avec p le nombre de paires de pôles magnétiques, Rᵢₙₜ le rayon interne du corps de rotor et Rₑₓₜ le rayon externe du corps. En effet, avec ce premier point interne spécifique, la forme de la première barrière de flux permet d'augmenter la densité de couple et de puissance de la machine électrique.

De préférence, chaque pôle magnétique peut comprendre au moins deux barrières de flux positionnées radialement les unes au-dessus des autres, et la deuxième ligne médiane (c'est-à-dire la ligne médiane de la deuxième barrière de flux) peut alors, en coupe transversale, couper la surface externe du corps de rotor en deux deuxièmes points d'extrémité. En d'autres termes, dans chaque plan de coupe transversale, la deuxième ligne médiane coupe le cercle représentant la surface externe du corps de rotor (surface externe cylindrique) en des deux premiers points d'extrémités. De plus, la deuxième ligne médiane peut comprendre un axe de symétrie radial (de préférence identique à l'axe de symétrie radial de la première ligne médiane), l'intersection de la deuxième ligne médiane et de son axe de symétrie étant un deuxième point interne à une distance correspondant à un deuxième rayon interne (deuxième distance interne) du centre (de l'axe) dudit corps de rotor. Au niveau du deuxième point interne de la deuxième ligne médiane, la tangente à la deuxième ligne médiane est perpendiculaire à l'axe de symétrie radial. Ainsi, la deuxième ligne médiane ne comporte pas de discontinuités au niveau du deuxième point interne, la dérivée d'un côté de la deuxième ligne médiane étant alors égale à la dérivée de l'autre côté de la deuxième ligne médiane.

La symétrie permet une optimisation des performances mécaniques de la machine électrique. De préférence, le deuxième rayon interne Ri2 du deuxième point interne de la ligne médiane de la deuxième barrière peut vérifier *Rᵢₙₜ* + (*Rₑₓₜ* - *Rᵢₙₜ*) · (0,066 · *p* + 0,519 - 0,05) ≤ *Ri2* ≤ *Rᵢₙₜ* + (*Rₑₓₜ* - *Rᵢₙₜ*) · (0,066 · *p* + 0,519 + 0,05) (par exemple en millimètre), avec p le nombre de paires de pôles magnétiques, Rᵢₙₜ le rayon interne du corps de rotor et Rₑₓₜ le rayon externe du corps de rotor. En effet, avec ce deuxième point interne spécifique, la forme des deux premières barrières de flux permet d'augmenter la densité de couple et de puissance de la machine électrique.

De plus, selon l'invention, au moins une barrière de flux (comprenant au moins deux évidements) comprend au moins un double pont séparant deux évidements, le double pont étant formé par au moins deux ponts magnétiques séparés entre eux d'une distance inférieure ou égale à deux fois la somme des épaisseurs (moyennes au niveau et le long de la ligne neutre de la barrière de flux par exemple) desdits ponts magnétiques. Le double pont peut ainsi comprendre une ouverture entre les ponts magnétiques situés de part et d'autre de ladite ouverture. L'ouverture a ainsi une largeur moyenne (au niveau et le long de la ligne médiane de ladite barrière de flux) inférieure ou égale à deux fois la somme des épaisseurs moyennes (au niveau et le long de la ligne neutre ou fibre neutre de ladite barrière de flux) des ponts magnétiques de part et d'autre de l'ouverture.

Un double pont peut également, selon l'invention, comprendre plus de deux ponts magnétiques, par exemple, trois ponts magnétiques, séparés deux à deux d'une distance inférieure ou égale à deux fois la somme des épaisseurs desdits ponts magnétiques. Ainsi, le long de la fibre neutre de la barrière de flux, un double pont peut par exemple comprendre successivement un premier pont magnétique, une première ouverture, un deuxième pont magnétique, une deuxième ouverture et un troisième pont magnétique. En d'autres termes, un double pont peut être constitué par une succession de ponts magnétiques et d'ouvertures et la largeur moyenne (au niveau et le long de la ligne neutre ou fibre neutre de ladite barrière de flux) des ouvertures est inférieure ou égale à deux fois la somme des épaisseurs moyennes (au niveau et le long de la ligne neutre ou fibre neutre de ladite barrière de flux) des ponts magnétiques de part et d'autre de l'ouverture concernée.

La largeur moyenne (au niveau et le long de la ligne neutre ou fibre neutre de ladite barrière de flux) des ouvertures est inférieure ou égale à deux fois la somme des épaisseurs moyennes (au niveau et le long de la ligne neutre ou fibre neutre de ladite barrière de flux) des ponts magnétiques de part et d'autre de l'ouverture concernée et la longueur de l'ouverture, supérieure à sa largeur s'étend dans une direction sensiblement orthogonale à la ligne neutre. Les longueurs des évidements le long de la fibre neutre de la barrière de flux (et à ce niveau) peuvent être strictement supérieures à deux fois la somme des épaisseurs moyennes (au niveau et le long de la ligne neutre ou fibre neutre de ladite barrière de flux) des ponts magnétiques et les largeurs des évidements, inférieures à leurs longueurs, peuvent s'étendre dans une direction sensiblement orthogonale à la direction de la ligne neutre. Ainsi, on peut distinguer les ouvertures des double-ponts des évidements.

De préférence, les parois des ponts magnétiques formant les double-ponts peuvent être droites (ou planes) ou comprendre au moins des parties droites (ou planes), de manière à simplifier la fabrication du corps de rotor.

Le corps de rotor avec double pont permet d'assurer la tenue mécanique du corps de rotor, et ce même pour des vitesses de rotation élevées (plus de 18 000 tours par minute, par exemple, en fonction de la masse d'aimants permanents utilisés ou de l'absence éventuelle d'aimants permanents et du diamètre de la machine), d'assurer la tenue en fatigue à un nombre de cycles élevé (plus de 200 000 cycles) tout en assurant les performances électromagnétiques.

De préférence, la droite radiale passant par chaque premier point d'extrémité de la ligne médiane de la première barrière de flux peut former un angle d'ouverture compris entre 21°/(2*p) et 31°/(2*p) avec le plan radial de séparation le plus proche, p étant le nombre de paires de pôles magnétiques, et la droite radiale passant par chaque deuxième point d'extrémité de la deuxième ligne médiane de la deuxième barrière de flux peut former un angle compris entre 57°/(2*p) et 67°/(2*p) avec le plan radial de séparation le plus proche. En effet, le positionnement spécifique de ces premier et/ou deuxième points d'extrémités permet d'améliorer l'effet des barrières de flux et d'augmenter le couple réluctant.

Avantageusement, la largeur des barrières de flux (des évidements des barrières de flux notamment) peut être décroissante depuis le point situé le plus près de l'axe de rotation respectivement vers les extrémités radiales. Autrement dit, la largeur des différents évidements des différentes barrières de flux diminue depuis le point situé le plus près de l'axe de rotation (qui peut être notamment le premier point interne pour la première barrière de flux et/ou le deuxième point interne pour la deuxième barrière de flux) vers les extrémités radiales des barrières de flux. Cette configuration permet de maximiser la densité de couple et de puissance de la machine électrique.

Alternativement, la largeur des barrières de flux peut être constante depuis le point situé le plus près de l'axe de rotation vers les extrémités radiales, de manière à simplifier la fabrication des tôles et des aimants permanents par exemple.

Selon une variante de l'invention, chaque pôle magnétique peut comprendre au moins un aimant permanent dans un évidement d'une barrière de flux

Ledit au moins un aimant (permanent) de chaque pôle magnétique permet de générer un flux magnétique, permettant la rotation du rotor par la création d'un champ magnétique tournant pouvant être généré aussi par le stator. Les barrières de flux permettent de guider le champ magnétique généré par le rotor et par l'au moins un aimant permanent vers l'entrefer (l'entrefer étant l'espace formé entre la périphérie du rotor et le stator), de manière à limiter les fuites de flux magnétiques et augmenter les performances (notamment couple et puissance) de la machine électrique. Une paire de pôles magnétiques comprend deux pôles magnétiques de polarité opposée.

Pour cette variante, avantageusement, le ou les aimants permanents peuvent avoir une forme incurvée adaptée à la forme des évidements des barrières de flux. Grâce à cette forme adaptée aux évidements des barrières de flux, on peut optimiser la quantité d'aimants permanents dans les évidements incurvés, ce qui permet d'augmenter les performances de la machine électrique. De plus, l'utilisation d'aimants incurvés adaptés à la forme des évidements permet d'augmenter le couple réluctant alors que l'utilisation d'aimants prismatiques ou en forme de barre rectangulaire selon l'art antérieur, entraîne une diminution du couple réluctant en raison de la forme non adaptée. Les aimants incurvés peuvent notamment être obtenus par exemple par usinage ou par toute méthode analogue.

De préférence, les aimants peuvent alors avoir une forme adaptée avec une épaisseur décroissante, correspondante à la largeur des évidements dans lesquels ils sont insérés, depuis le centre vers l'extérieur du corps de rotor.

Alternativement, lorsque la largeur des évidements est constante, les aimants peuvent alors avoir une forme adaptée avec une épaisseur constante, correspondante à la largeur des évidements dans lesquels ils sont insérés, depuis le centre vers l'extérieur du corps de rotor.

Alternativement, le rotor peut ne comprendre aucun aimant permanent. Cette configuration permet d'éviter une logistique complexe pour approvisionner des matériaux rares nécessaires à la fabrication des aimants permanents. De plus, l'absence d'utilisation de ces matériaux rares permet un impact réduit sur l'environnement. Elle permet aussi de réduire le coût de la machine. L'absence d'aimants permanents permet également de faciliter le recyclage du rotor. En effet, lorsque le rotor comprend des aimants permanents, le recyclage du rotor nécessite une séparation des aimants permanents du corps de rotor, tâche complexe et coûteuse. En se passant d'aimants permanents, il n'est alors plus nécessaire de les séparer du corps de rotor. Le corps de rotor peut alors directement être recyclé. Lorsque le rotor ne comprend aucun aimant permanent, la machine est alors considérée comme « purement synchro-réluctante ».

Les tôles du corps de rotor peuvent être réalisées en matériau ferromagnétique de manière à guider le flux magnétique créé par des aimants permanents et éventuellement le bobinage statorique. Les évidements des barrières de flux peuvent être obtenus par des perforations dans les tôles empilées formant le corps de rotor, et les ponts magnétiques sont formés par les tôles elles-mêmes.

De préférence, au moins une barrière de flux (de préférence, chaque barrière de flux) peut comprendre au moins trois évidements et au moins deux double-ponts. Ainsi, les double-ponts séparent les évidements deux à deux. De cette manière, le long de la fibre neutre d'une même barrière de flux, on peut trouver successivement un premier évidement puis un premier double pont, un deuxième évidement, puis un deuxième double pont, et enfin un troisième évidement. La barrière de flux peut donc comprendre une succession d'évidements et de double-ponts le long de la fibre neutre. L'utilisation de double-pont entre deux évidements permet d'améliorer la résistance mécanique et la tenue en fatigue tout en assurant les performances électromagnétiques.

Selon une configuration avantageuse de l'invention, le rotor peut comprendre au moins au moins trois barrières de flux positionnées radialement les unes au-dessus des autres. Ainsi, le rotor peut comprendre une barrière de flux externe, une barrière de flux centrale (ou intermédiaire) et une barrière de flux interne, les barrières de flux étant séparées entre elles par des portions de corps de rotor s'étendant sensiblement radialement entre les barrières de flux. De ce fait, les performances électromagnétiques du rotor sont améliorées.

Selon un mode de réalisation de l'invention, chaque double-pont peut être formé par au moins deux ponts magnétiques séparés par une ouverture de section sensiblement trapézoïdale, rectangulaire ou carrée. Cette ouverture permet de s'adapter facilement à la forme des ponts magnétiques et à la forme de la ligne neutre de la barrière de flux. En effet, la ligne neutre de la barrière de flux est généralement continue et contient au moins une portion concave pour orienter le flux magnétique vers l'extérieur du rotor. Ainsi, si les ponts magnétiques ont une épaisseur (largeur le long de la fibre neutre) constante, une ouverture trapézoïdale peut s'adapter à la courbure de la barrière de flux. Alternativement, si les ponts magnétiques ont une épaisseur (largeur le long de la fibre neutre) variable, une ouverture rectangulaire ou carrée peut être utilisée, la variation d'épaisseur des ponts magnétiques permettant une adaptation à la courbure de la barrière de flux. Bien entendu, il est également possible de combiner une ouverture de section trapézoïdale et des ponts magnétiques d'épaisseurs variables pour s'adapter à la courbure de la ligne neutre.

De préférence, la longueur de l'ouverture (dans une direction orthogonale à la ligne neutre de la barrière de flux) peut être sensiblement égale à la longueur (dans une direction orthogonale à la ligne neutre de la barrière de flux) desdits ponts magnétiques de part et d'autre de l'ouverture et la largeur de l'ouverture (le long de la fibre neutre) peut être inférieure ou égale à deux fois la somme des épaisseurs (le long de la fibre neutre) des ponts magnétiques de part et d'autre de l'ouverture, lesdites longueurs étant de préférence supérieures ou égales aux largeurs. Ainsi, les ouvertures ont une faible largeur dans la direction de la fibre neutre. Lorsque l'ouverture est trapézoïdale, la largeur s'entend comme la largeur moyenne au niveau de la fibre neutre. Lorsque les ponts magnétiques sont d'épaisseurs variables, l'épaisseur s'entend comme l'épaisseur moyenne au niveau de la ligne neutre de la barrière de flux. Ces conditions géométriques permettent de réduire les contraintes maximales dans les ponts magnétiques et ainsi d'augmenter la durée de vie en fatigue.

Avantageusement, l'épaisseur (dans la direction de la fibre neutre de la barrière de flux) des ponts magnétiques desdits double-ponts peut être sensiblement constante ou décroissante le long de la longueur du pont magnétique, de l'intérieur vers l'extérieur. Lorsqu'elle est constante, la fabrication est simplifiée et le flux magnétique est mieux maîtrisé. Lorsqu'elle est décroissante, elle peut mieux s'adapter à la courbure de la barrière de flux.

Selon un aspect de l'invention, l'épaisseur des ponts magnétiques desdits double-ponts peut être comprise entre 0,2 et 1,5mm, de préférence entre 0,2 et 0,5mm. Ainsi, ces ponts magnétiques sont réalisables et sont suffisamment fins pour ne pas altérer (ou altérer le moins possible) les performances électromagnétiques du rotor.

De préférence, les rayons de raccordement entre les ponts magnétiques des double-ponts et les évidements peuvent être compris entre 0,2 et 0,5mm. Ces valeurs de rayons de raccordement permettent de limiter les contraintes maximales dans les ponts magnétiques et ainsi augmenter la durée de vie en fatigue, notamment pour des hautes vitesses de rotation, supérieures à 18000 tours par minute.

Avantageusement, les rayons de raccordement peuvent être tangents aux parois des évidements et/ou ouvertures de manière à limiter encore les contraintes maximales.

Selon une configuration avantageuse, le corps de rotor peut être formé par un empilage de tôles et les épaisseurs des ponts magnétiques et/ou les rayons de raccordement peuvent être sensiblement égaux à l'épaisseur desdites tôles. Cette configuration permet un bon compromis entre la fabrication des tôles et la réduction des contraintes mécaniques.

L'invention concerne également une machine électrique synchro-réluctante comprenant un rotor selon l'une des variantes ou combinaisons de variantes décrites précédemment et un stator entourant le rotor.

La machine électrique peut être synchro-réluctante assistée d'aimants permanents et elle comprend des espaces vides de matière aménagés dans le rotor. Ces espaces vides, constitués par les évidements, forment les barrières de flux. Certains évidements d'une ou de plusieurs barrières de flux peuvent aussi être utilisés pour loger un aimant permanent.

La machine électrique peut alternativement être purement synchro-réluctante ; dans ce cas, elle ne comprend aucun aimant permanent et les espaces vides de matière aménagés dans le rotor, constitués par les évidements, forment alors les barrières de flux.

La machine électrique peut avantageusement comprendre un arbre de rotor sur lequel est positionné le corps de rotor.

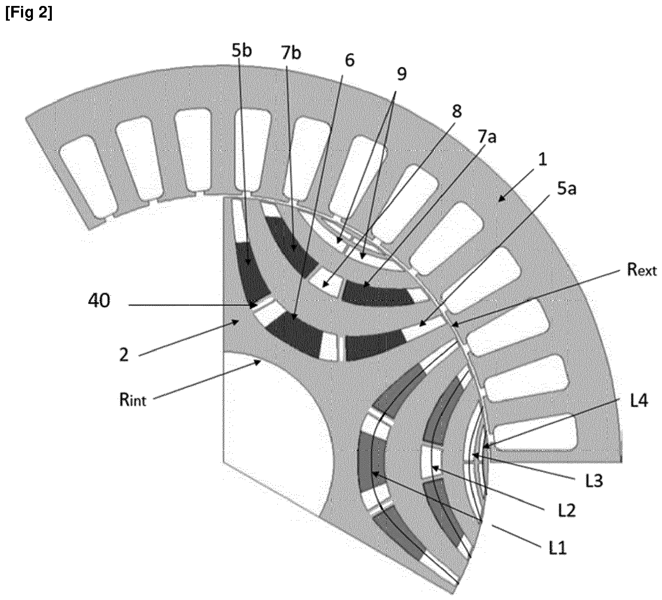

La figure 2 illustre, de manière schématique et non limitative, une vue en coupe partielle d'un stator et d'un rotor d'une machine électrique selon l'invention.

La machine électrique comprend un stator 1 et un rotor 2. Le stator 1 et le rotor 2 sont coaxiaux et le rotor 2 est mis en place au sein du stator 1. En d'autres termes, le stator 1 entoure le rotor 2.

Le rotor 2 comprend un corps de rotor défini par une surface interne cylindrique de rayon interne *Rᵢₙₜ* et par une surface externe cylindrique de rayon externe *Rₑₓₜ.*

Le rotor 2 comprend trois paires de pôles magnétiques (la figure représentant un tiers du rotor montre deux pôles magnétiques, le rotor 2 présente donc au total six pôles magnétiques). Chaque pôle magnétique du rotor comprend ici quatre barrières de flux, situées radialement les unes au-dessus des autres, du centre vers l'extérieur.

La première barrière de flux, c'est-à-dire la barrière de flux interne la plus proche de l'axe de rotation du rotor, est définie par la première ligne médiane L1 alors que la deuxième barrière de flux est définie par la deuxième ligne médiane L2.

Les troisième et quatrième barrières de flux sont définies respectivement par les troisième et quatrième lignes médianes L3 et L4.

Les première, deuxième, troisième et quatrième lignes médianes L1, L2, L3 et L4 sont concaves et ne présente pas de discontinuités.

La première barrière de flux L1 comprend au moins trois évidements : un évidement central 6 et deux évidements latéraux 5a et 5b. Dans chacun de ces évidements, un aimant permanent est mis en place (représenté en noir sur l'un des pôles magnétiques et en gris foncé sur l'autre pôle magnétique). Alternativement, les évidements pourraient ne comprendre aucun aimant permanent.

La deuxième barrière de flux L2 comprend au moins 3 évidements : un évidement central 8 et deux évidements latéraux 7a et 7b. Dans chacun des évidements latéraux 7a et 7b, un aimant permanent est mis en place (représenté en noir sur l'un des pôles magnétiques et en gris foncé sur l'autre pôle magnétique). L'évidement central 8 est laissé vide (sans aimant permanent). Alternativement, les évidements pourraient ne comprendre aucun aimant permanent.

La troisième et la quatrième barrière de flux L3, L4 comprennent chacune deux évidements latéraux 9 dans lesquels aucun aimant permanent n'est mis en place (mais pourraient alternativement comprendre un aimant permanent). Ces troisième et quatrième barrières de flux ne comportent pas d'évidement central.

Comme on peut le voir sur la figure, la forme des aimants permanents est adaptée à la forme des évidements alors qu'au contraire, dans l'art antérieur, les évidements sont de section sensiblement rectangulaire afin d'être adaptés à la forme sensiblement rectangulaire des aimants permanents. Les aimants permanents de la figure 1 ont une forme incurvée et suivent la première et la deuxième lignes médianes L1 et L2 des barrières de flux sur lesquels ils sont mis en place.

Grâce à leur forme spécifique, la quantité d'aimants permanents est optimisée et la densité de couple et de puissance de la machine électrique est améliorée.

Par ailleurs, sur la première barrière de flux (barrière de flux interne), les évidements 5a et 6 et les évidements 6 et 5b sont séparés par des double-ponts 40.

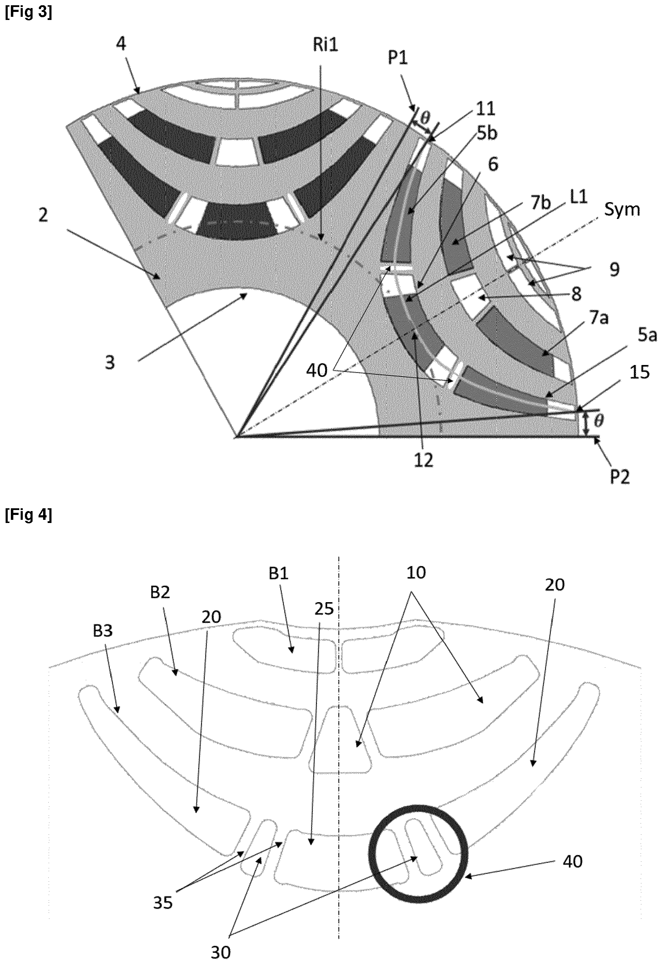

La figure 3 illustre, de manière schématique et non limitative, les détails des barrières de flux du rotor pour machine électrique selon l'invention.

La figure 3 illustre une portion d'un corps de rotor d'un rotor 2 pour machine électrique. Le corps de rotor est défini par une surface interne cylindrique de rayon interne 3 apte à s'engager sur un arbre de rotor et par une surface externe cylindrique de rayon externe 4, sensiblement égal au rayon interne du stator de la machine électrique.

La figure 3 illustre un tiers d'une coupe du corps de rotor et comprend deux pôles magnétiques.

Ainsi, le rotor comprend ici trois paires de pôles magnétiques.

Les pôles magnétiques sont répartis circonférentiellement sur le corps de rotor et sont séparés par des plans radiaux de séparation P1 et P2 : le corps de rotor comprend donc autant de plans radiaux de séparation que de pôles magnétiques.

Les pôles magnétiques comprennent ici chacun quatre barrières de flux, situés radialement les unes au-dessus des autres du centre vers l'extérieur.

La première barrière de flux, c'est-à-dire la barrière de flux interne la plus proche de l'axe de rotation du rotor, est définie par la première ligne médiane L1.

Les lignes médianes des différentes barrières de flux sont toutes concaves et ne présentent pas de discontinuités. De plus, elles sont symétriques par rapport à l'axe radial de symétrie Sym. L'axe radial de symétrie Sym des barrières de flux du pôle magnétique forme une bissectrice de l'angle formé par les plans de séparation P1 et P2 de chaque côté du pôle magnétique concerné.

La première barrière de flux comprend au moins trois évidements : un évidement central 6 et deux évidements latéraux 5a et 5b. Dans chacun de ces évidements, un aimant permanent est mis en place (représenté en noir sur l'un des pôles magnétiques et en gris foncé sur l'autre pôle magnétique). Alternativement, cette barrière de flux pourrait ne comprendre aucun aimant permanent.

La deuxième barrière de flux comprend au moins 3 évidements : un évidement central 8 et deux évidements latéraux 7a et 7b. Dans chacun des évidements latéraux 7a et 7b, un aimant permanent est mis en place (représenté en noir sur l'un des pôles magnétiques et en gris foncé sur l'autre pôle magnétique). L'évidement central 8 est laissé vide (sans aimant permanent). Alternativement, cette barrière de flux pourrait ne comprendre aucun aimant permanent.

La troisième et la quatrième barrières de flux comprennent chacune deux évidements latéraux 9 dans lesquels aucun aimant permanent n'est mis en place (mais pourraient alternativement comprendre un aimant permanent). Ces barrières de flux ne comportent pas d'évidement central.

Comme on peut le voir sur la figure, la forme des aimants permanents est adaptée à la forme des évidements alors qu'au contraire, dans l'art antérieur, les évidements sont de section sensiblement rectangulaire afin d'être adaptés à la forme sensiblement rectangulaire des aimants permanents. Les aimants permanents de la figure 3 ont une forme incurvée et suivent la première et la deuxième lignes médianes des première et deuxième barrières de flux sur lesquels ils sont mis en place.

Grâce à leur forme spécifique, la quantité d'aimants permanents est optimisée et la densité de couple et de puissance de la machine électrique est améliorée.

La première ligne médiane L1 est définie par deux premiers points d'extrémité 15 et 11 situés au niveau de l'intersection de la première ligne médiane avec la surface externe de rayon externe 4 du rotor, en vue en coupe dans un plan orthogonal à l'axe de rotation. En, effet, dans une telle coupe, les surfaces interne et externe du corps de rotor sont représentées par des cercles. Les droites radiales passant par les points d'intersections 15 et 11 forment un angle d'ouverture θ avec le plan de séparation le plus proche (P1 pour le point d'extrémité 11 et P2 pour le point d'extrémité 15).

La première ligne médiane L1 est également définie par un premier point interne 12 situé sur l'axe radial de symétrie Sym, ce premier point interne étant situé à une distance égale à un premier rayon interne Ri1 du centre.

Au niveau du premier point interne 12, la première ligne médiane est perpendiculaire à l'axe radial de symétrie Sym.

De la même manière, la deuxième ligne médiane, et éventuellement la troisième ligne médiane et de préférence la quatrième ligne médiane, sont définies chacune par deux (deuxièmes) points d'extrémité situés au niveau de l'intersection de la ligne médiane concernée avec la surface externe 4 du corps de rotor, en vue en coupe dans un plan orthogonal à l'axe de rotation. En, effet, dans une telle coupe, les surfaces interne et externe du corps de rotor sont représentées par des cercles. Les droites radiales passant par les points d'intersections de chaque ligne médiane forment un angle avec le plan de séparation le plus proche.

Chaque ligne médiane est également définie par un point interne situé sur l'axe radial de symétrie Sym, ce point interne étant situé à une distance égale à un rayon interne du centre. Au niveau du point interne de chaque ligne médiane, la ligne médiane concernée est perpendiculaire à l'axe radial de symétrie Sym.

On peut observer que sur la figure 3, comme sur la figure 2, la largeur des évidements des barrières de flux diminue depuis le point interne vers les points d'extrémités. L'épaisseur des aimants permanents est variable et décroit de la même manière de l'intérieur du rotor vers l'extérieur pour s'adapter à la forme des évidements. Cette forme permet d'augmenter le couple de la machine électrique.

Par ailleurs, sur la première barrière de flux (barrière de flux interne), les évidements 5a et 6 et les évidements 6 et 5b sont séparés par des double-ponts 40.

La figure 4 illustre, de manière schématique et non limitative, un exemple de rotor de machine électrique selon l'invention.

Le rotor illustré comprend plusieurs pôles magnétiques dont un seul est représenté sur la figure.

Le trait mixte représente l'axe radial du pôle magnétique.

Le corps de rotor comprend ici trois (mais pourrait comprendre un nombre différent) barrières de flux B1, B2 et B3 positionnées radialement les unes au-dessus des autres. La barrière de flux interne B3 est la plus proche de l'axe de rotation du rotor (et donc de l'arbre de rotor, non représenté, sur lequel est positionné le corps de rotor) ; la barrière de flux centrale B2 est située radialement au-dessus de la barrière de flux interne B3 et la barrière de flux externe B1 est située radialement au-dessus de la barrière de flux centrale B2.

Chacune des barrières de flux B1, B2 et B3 comprend des évidements 10, 20, 25.

La barrière de flux interne B3 comprend deux évidements latéraux 20 et un évidement central 25. Ces évidements 20 et 25 sont séparés par des double-ponts 40 qui comprennent chacun deux ponts magnétiques 35 séparés par une ouverture 30 de section sensiblement trapézoïdale. Tel que représenté, les ponts magnétiques ont une épaisseur constante mais ils pourraient bien entendu avoir une épaisseur variable.

Les parois latérales des ponts magnétiques 35 formant les double-ponts 40 sont droites (c'est-à-dire planes) entre les rayons de raccordement aux extrémités.

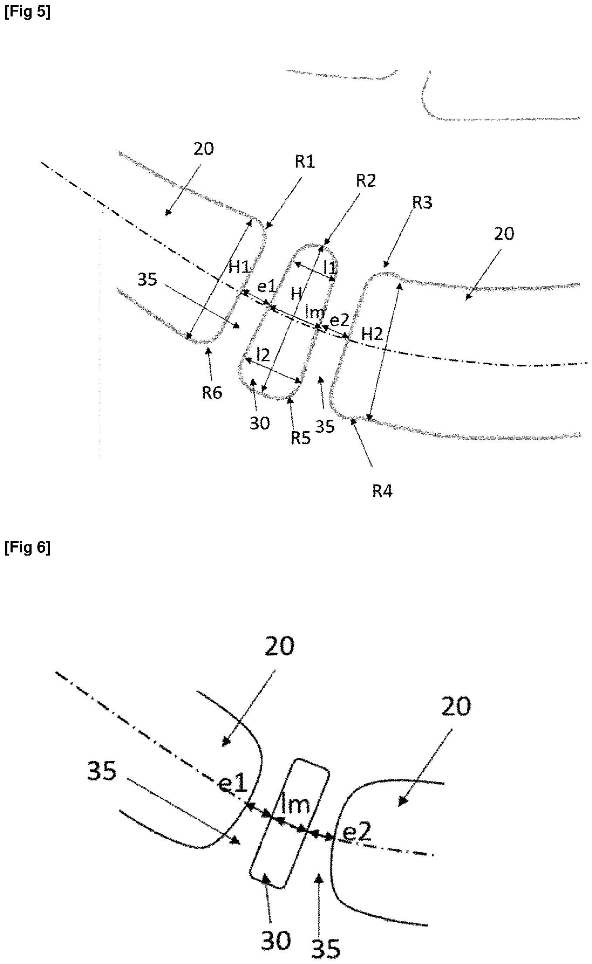

La figure 5 illustre, de manière schématique et non limitative, un exemple de double pont selon l'invention.

Sur cette figure, le trait mixte illustre la ligne neutre (fibre neutre) de la barrière de flux concernée, correspondant à une ligne médiane concave et sans discontinuités.

Le double pont représenté sépare les évidements 20 situés de part et d'autre du double pont, ces évidements 20 appartenant à la même barrière de flux (représentée par la ligne neutre). Le double-pont comprend ici deux ponts magnétiques 35 séparés par une ouverture 30. L'ouverture 30 a une section trapézoïdale et les ponts magnétiques 35 ont une épaisseur constante e1, e2.

La largeur moyenne Im de l'ouverture 30 au niveau de la ligne neutre et dans la direction de la ligne neutre, est inférieure ou égale à deux fois la somme des épaisseurs e1 et e2 des ponts magnétiques 35.

La longueur H de l'ouverture 30 (ou hauteur), dans une direction orthogonale à la ligne neutre, est sensiblement égale aux hauteurs H1 et H2 des évidements 20 de part et d'autre du double pont, les hauteurs H1 et H2 étant également dans une direction orthogonale à la ligne neutre de la barrière de flux, de direction sensiblement identique à la longueur H de l'ouverture et au niveau de l'extrémité de l'évidement à proximité du double pont.

La longueur H de l'ouverture 30 est supérieure ou égale à la largeur moyenne lm de l'ouverture 30.

En outre, des rayons de raccordement R1, R2, R3, R4, R5 et R6 sont prévus au niveau des jonction entre les ponts magnétiques 35 et les parois des évidements 20 ou des ouvertures 30 de manière à faciliter la fabrication. Ces rayons de raccordement permettent également de réduire les contraintes maximales pour assurer la tenue mécanique en fatigue, notamment pour des vitesses de rotation supérieure à 18 000 tours par minute.

De préférence, ces rayons de raccordement peuvent être tangents aux surfaces auxquelles ils sont raccordés de manière à encore réduire les contraintes maximales.

Les rayons de raccordement R3 et R4 sont montrés non tangents à une surface de l'évidement mais ils pourraient être tangents, sans sortir du cadre de l'invention.

Les parois latérales des ponts magnétiques formant le double-pont sont droites (c'est-à-dire planes) entre les rayons de raccordement R1, R2, R3, R4, R5 et R6 aux extrémités.

La figure 6 illustre, de manière schématique et non limitative, une variante d'un double pont de rotor de machine électrique selon l'invention.

Le double pont, qui sépare les évidements 20 d'une même barrière de flux, comprend ici deux ponts magnétiques 35 séparés par une ouverture 30. Ici, l'ouverture 30 a une largeur Im constante, la largeur Im étant la dimension dans la direction de la ligne neutre de la barrière de flux concernée, la ligne neutre étant représentée par le trait mixte et correspondant à la ligne médiane concave et sans discontinuités de la barrière de flux.

Comme la ligne neutre est incurvée (ce n'est pas une ligne droite), les ponts magnétiques 35 n'ont ici pas une épaisseur (dimension dans la direction de la ligne neutre) constante, contrairement à la solution de la figure 5, mais ont une épaisseur variable e1 e2, avantageusement décroissante de l'intérieur du rotor vers l'extérieur pour favoriser le guidage du flux magnétique vers l'extérieur, c'est-à-dire vers le stator.

La largeur lm est inférieure ou égale à deux fois la somme des épaisseurs e1 et e2 des ponts magnétiques 35 au niveau de la ligne neutre (e1 et e2 correspondent alors sensiblement à l'épaisseur moyenne des ponts magnétiques 35)

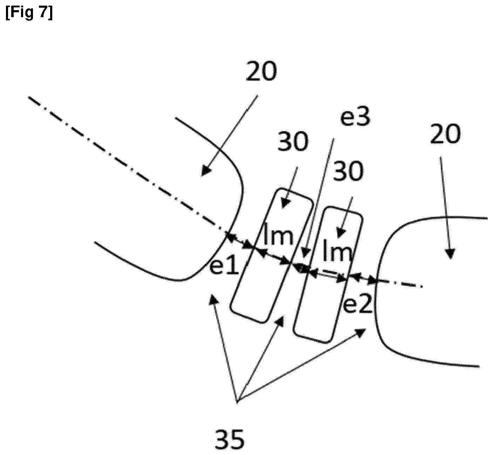

La figure 7 illustre, de manière schématique et non limitative, une autre variante d'un double pont de rotor de machine électrique selon l'invention.

Le double pont, qui sépare les évidements 20 d'une même barrière de flux, comprend ici trois ponts magnétiques 35 séparés deux à deux par des ouvertures 30. Ici, chaque ouverture 30 a une largeur lm constante, la largeur lm étant la dimension dans la direction de la ligne neutre de la barrière de flux concernée, la ligne neutre étant représentée par le trait mixte et correspondant à la ligne médiane concave et sans discontinuités de la barrière de flux. Comme la ligne neutre est incurvée (ce n'est pas une ligne droite), les ponts magnétiques 35 n'ont ici pas une épaisseur (dimension dans la direction de la ligne neutre) constante, contrairement à la solution de la figure 5, mais ont une épaisseur variable e1 e2 e3 avantageusement décroissante de l'intérieur du rotor vers l'extérieur pour favoriser le guidage du flux magnétique vers l'extérieur, c'est-à-dire vers le stator.

La largeur lm de chaque ouverture est inférieure ou égale à deux fois la somme des épaisseurs e1 e2 ou e3 des ponts magnétiques 35 entourant l'ouverture 30 concernée au niveau de la ligne neutre (e1 e2 et e3 correspondent alors sensiblement à l'épaisseur moyenne des ponts magnétiques 35).

Ainsi, le double pont comprend une succession de ponts magnétiques et d'ouvertures.

### Exemples

Les caractéristiques et avantages du dispositif selon l'invention apparaîtront plus clairement à la lecture des exemples comparatifs ci-après.

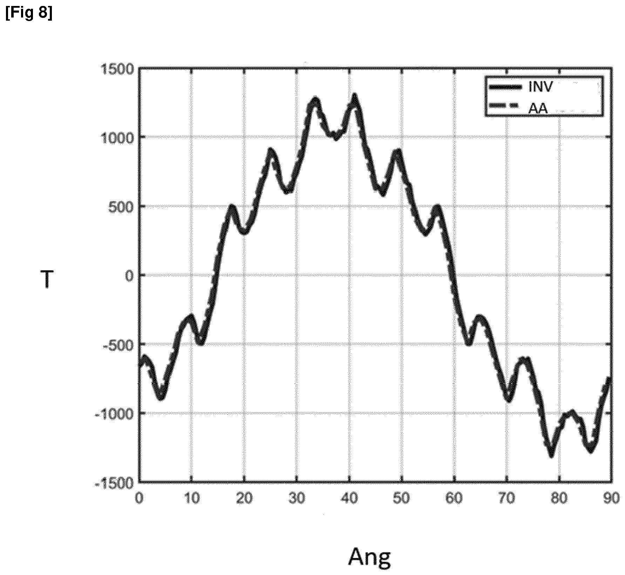

Les figures 8 à 11 illustrent des comparaisons de performances entre la machine électrique avec un rotor selon la figure 1 de l'art antérieur et un rotor selon la figure 4 selon l'invention. L'épaisseur du pont magnétique (du simple pont) de la figure 1 est le double de l'épaisseur de chaque pont magnétique du double pont de la figure 4.

Sur ces figures, les courbes INV correspondent à celles obtenues avec le rotor de la figure 4 selon l'invention alors que les courbes AA correspondent à celles obtenues avec le rotor de la figure 1 selon l'art antérieur.

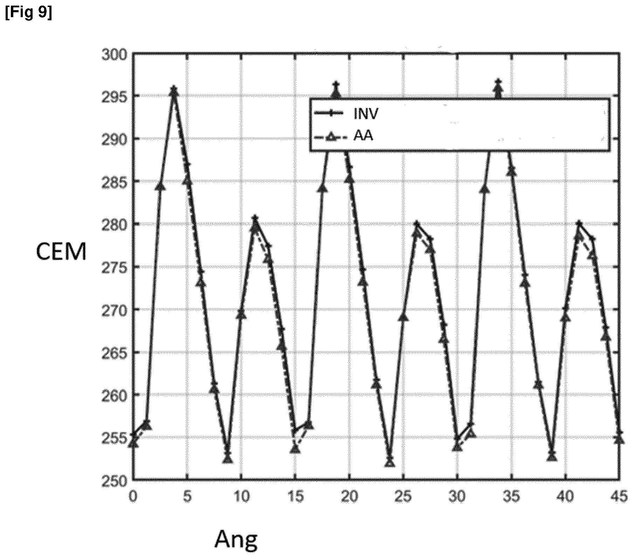

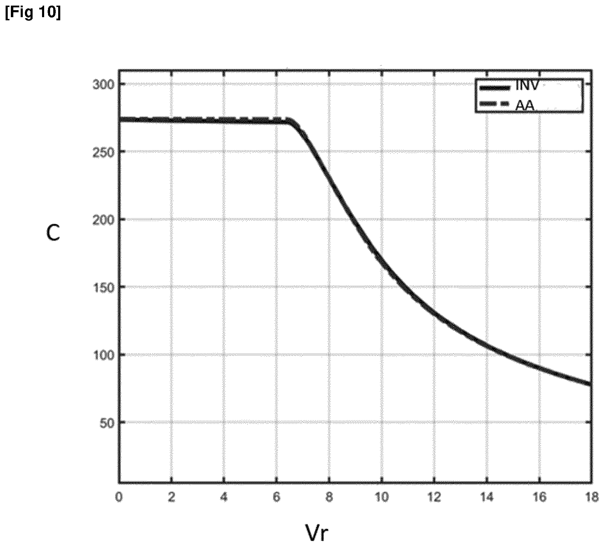

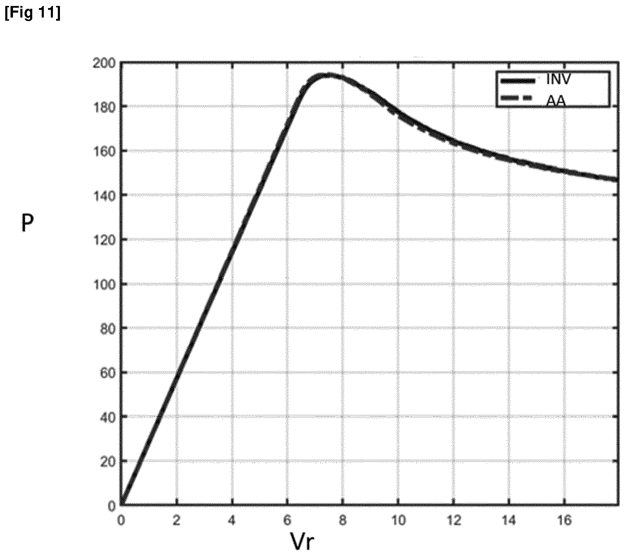

La figure 8 représente la tension à vide T de la machine électrique, en volts, en fonction de la position angulaire Ang du rotor (en degrés) ; la figure 9 illustre l'ondulation du couple électromagnétique CEM, en N.m, en fonction de la position angulaire Ang du rotor (en degrés) ; la figure 10 illustre le couple mécanique C, en N.m, de la machine en fonction de la vitesse de rotation Vr, en milliers de tours par minutes, de la machine électrique ; la figure 11 illustre la puissance P, en kW, de la machine en fonction de la vitesse de rotation Vr, en millier de tours par minute, de la machine électrique.

On observe sur les figures 8 à 11 que les performances de la machine selon l'invention et de la machine de l'art antérieur sans double pont sont équivalentes.

Par ailleurs, pour une vitesse de 18 000 tours par minute et grâce aux double-ponts, la contrainte mécanique maximale obtenue est de :
- 399 MPa pour le rotor de la figure 1 de l'art antérieur ;
- 358 MPa pour le rotor de la figure 4 de l'invention, ce qui représente une réduction de la contrainte maximale de 10% par rapport à la solution de l'art antérieur.

On peut ainsi, grâce aux double-ponts, par exemple augmenter la vitesse de la machine électrique avec le rotor de la figure 4 selon l'invention à 20 000 tours par minute, la contrainte maximale obtenue étant alors de 401 MPa. Ainsi, grâce au rotor de l'invention, on peut augmenter la vitesse de rotation de la machine électrique de près de 11%.

## Revendications

1. Rotor (2) pour machine électrique, le rotor (2) comprenant :
- un corps de rotor, de préférence configuré pour être positionné sur un arbre de rotor, le corps de rotor étant défini par une surface interne cylindrique de rayon interne (3, Rᵢₙₜ) et une surface externe cylindrique de rayon externe (4, Rₑₓₜ) ;
- au moins une paire de pôles magnétiques répartis circonférentiellement sur le corps de rotor, les pôles magnétiques successifs étant séparés par des plans radiaux de séparation (P1, P2),
- chaque pôle magnétique comprend au moins une barrière de flux (B1, B2, B3), chaque barrière de flux comprenant au moins un évidement (20, 25, 10, 5a, 5b, 6, 7a,7b, 8, 9) et au moins l'une desdites au moins une barrière de flux (B1, B2, B3) comprend au moins deux évidements, la première ligne médiane (L1) de la première barrière de flux (B3) de chaque pôle magnétique, en partant du centre vers l'extérieur du rotor, étant une ligne concave sans discontinuités, en vue en coupe transversale la première ligne médiane (L1) coupant la surface externe du corps de rotor en deux premiers points d'extrémité (15, 11), et comprenant un axe de symétrie radial (Sym), l'intersection de la première ligne médiane (L1) et de son axe de symétrie radial (Sym) étant un premier point interne (12) à un premier rayon interne du centre dudit corps de rotor, le premier rayon interne Ri1 du premier point interne (12) de la première ligne médiane (L1) de la première barrière de flux vérifiant *Rᵢₙₜ* + (*Rₑₓₜ* - *Rᵢₙₜ*) · (0,105 · *p* + 0,147 - 0,05) ≤ *Ri*1 ≤ *Rᵢₙₜ* + (*Rₑₓₜ* - *Rᵢₙₜ*) · (0,105 · *p* + 0,147 + 0,05) p étant le nombre de paires de pôles magnétiques, Rᵢₙₜ étant le rayon interne du corps de stator et Rₑₓₜ étant le rayon externe du corps de stator,
- les évidements d'une même barrière de flux étant séparés entre eux ;
**caractérisé en ce qu'**au moins une barrière de flux comprend au moins un double pont (40) séparant deux évidements, ledit double pont étant formé par au moins deux ponts magnétiques (35) séparés entre eux d'une distance inférieure ou égale à deux fois la somme des épaisseurs desdits ponts magnétiques (35).

2. Rotor (2) pour machine électrique selon la revendication 1, dans lequel chaque pôle magnétique comprend au moins deux barrières de flux (B1, B2, B3) positionnées radialement les unes au-dessus des autres, la deuxième ligne médiane (L2) de la deuxième barrières de flux (B2) de chaque pôle magnétique, en partant du centre vers l'extérieur du rotor, étant une ligne concave sans discontinuités, en vue en coupe transversale la deuxième ligne médiane (L2) coupant la surface externe du corps de rotor en deux deuxièmes points d'extrémité, et comprenant une symétrie par rapport audit axe de symétrie radial, l'intersection de la deuxième ligne médiane (L2) et dudit axe de symétrie radial (Sym) étant un deuxième point interne à un deuxième rayon interne du centre dudit corps de rotor, le deuxième rayon interne Ri2 du deuxième point interne de la deuxième ligne médiane (L2) de la deuxième barrière de flux (B2) vérifiant *Rᵢₙₜ* + (*Rₑₓₜ* - *Rᵢₙₜ*) · (0,066 · *p* + 0,519 - 0,05) ≤ *Ri2* ≤ *Rᵢₙₜ* + (*Rₑₓₜ* - *Rᵢₙₜ*) · (0,066 · *p* + 0,519 + 0,05) p étant le nombre de paires de pôles magnétiques, Rᵢₙₜ étant le rayon interne du corps de stator et Rₑₓₜ étant le rayon externe du corps de stator.

3. Rotor (2) pour machine électrique selon l'une des revendications 1 ou 2, dans lequel chaque pôle magnétique comprend au moins un aimant permanent dans un évidement.

4. Rotor pour machine électrique selon l'une des revendications 1 ou 2, dans lequel le corps de rotor ne comprend aucun aimant permanent.

5. Rotor (2) pour machine électrique selon l'une des revendications précédentes, dans lequel au moins une, de préférence chaque, barrière de flux (B1, B2, B3) comprend au moins trois évidements et au moins deux double-ponts (40).

6. Rotor (2) pour machine électrique selon l'une des revendications précédentes, dans lequel le corps de rotor comprend au moins trois barrières de flux (B1, B2, B3) positionnées radialement les unes au-dessus des autres.

7. Rotor (2) pour machine électrique selon l'une des revendications précédentes, dans lequel chaque double-pont (40) est formé par deux ponts magnétiques (35) séparés par une ouverture (30) de section sensiblement trapézoïdale, rectangulaire ou carrée et de préférence dont la longueur (H) est de préférence sensiblement égale à la longueur (H1, H2) desdits ponts magnétiques et dont la largeur (Im) est de préférence inférieure ou égale à deux fois la somme des épaisseurs (e1, e2) des ponts magnétiques (35) formant le double-pont (40).

8. Rotor (2) de machine électrique selon l'une des revendications précédentes, dans lequel l'épaisseur (e1, e2) des ponts magnétiques (35) desdits double-ponts (40) est sensiblement constante ou décroissante le long de la longueur (H) du pont magnétique, de l'intérieur vers l'extérieur.

9. Rotor (2) de machine électrique selon l'une des revendications précédentes, dans lequel l'épaisseur (e1, e2) des ponts magnétiques (35) desdits double-ponts (40) est comprise entre 0,2 et 1,5mm, de préférence entre 0,2 et 0,5mm.

10. Rotor (2) de machine électrique selon la revendication précédente, dans lequel les rayons de raccordement (R1, R2, R3, R4, R5, R6) entre les ponts magnétiques des double-ponts (40) et les évidements sont compris entre 0,2 et 0,5mm.

11. Rotor (2) de machine électrique selon l'une des revendications précédentes, dans lequel le corps de rotor est formé par un empilage de tôles et de préférence les épaisseurs (e1, e2) des ponts magnétiques et/ou les rayons de raccordement (R1, R2, R3, R4, R5, R6) sont sensiblement égaux à l'épaisseur desdites tôles.

12. Machine électrique synchro-réluctante comprenant un rotor (2) selon l'une des revendications précédentes et un stator (1) entourant le rotor (2).
